# EUROPÄISCHE PATENTSCHRIFT

(11) **EP 1 790 206 B1**
(45) Veröffentlichungstag und Bekanntmachung des Hinweises auf die Patenterteilung: **21.07.2010**
(21) Anmeldenummer: 06120486.3
(22) Anmeldetag: 12.09.2006
(51) Int. Cl.: A01D 89/00

(54) **Aufsammeleinrichtung für landwirtschaftliche Erntemaschinen**
Pick-up for harvester
Ramasseur pour récolteuse

(30) Priorität: 25.11.2005 DE 102005056554
(43) Veröffentlichungstag der Anmeldung: 30.05.2007
(73) Patentinhaber: Usines CLAAS France S.A.S., 57148 St. Rémy/Woippy CEDEX (FR)
(72) Erfinder: Gette, Christoph, 57300 Tremery (FR); Hasse, Lionel, 57420 Solgne (FR); Meaux, Fabien, 57000 Metz (FR); Bonhomme, Thierry, 57730 Lachambre (FR)
(74) Vertreter: Ellerbrächter, Dirk

(56) Entgegenhaltungen:
- DE-A1- 2 929 592
- DE-A1- 10 120 204
- FR-A1- 2 864 425
- US-A- 4 015 410

## Beschreibung

Die Erfindung betrifft eine Aufsammeleinrichtung für landwirtschaftliche Erntemaschinen und einem hierzu oberseitig angeordneten quer zur Fahrtrichtung der landwirtschaftlichen Erntemaschine erstreckenden Niederhalter.

Diese Aufsammeleinrichtung, im allgemeinen als Pickup oder Rakeup ausgeführt, dient dazu, während der Fahrt auf dem Bearbeitungsfeld liegendes Erntegut, wie beispielsweise geschwadetes Grünfutter, Stroh oder Heu vom Boden aufzunehmen und es weiteren Bearbeitungsorganen innerhalb der landwirtschaftlichen Erntemaschine zuzuführen.

Zur Begrenzung der aufwärts gerichteten Bewegung des Erntegutes bei der Aufnahme vom Boden des Bearbeitungsfeldes und sicheren Zuführung zu den nachfolgenden Bearbeitungsorganen ist der Aufsammeleinnchtung ein Niederhalter zugeordnet.

Aus der DE 101 20 204 A1 wird beispielsweise eine Aufsammeleinrichtung mit einem Niederhalter der gattungsgemäßen Art gezeigt. Der Niederhalter ist dabei als ein sich quer zur Fahrtrichtung erstreckender Rollenniederhalter ausgeführt. Dabei besteht der Rolleniederhalter aus zwei in Gutflussrichtung hintereinander geschalteten Niederhalterollen, die vor beziehungsweise teilweise oberhalb jedoch innerhalb des Wirkungsbereichs der Aufnahmetrommel angeordnet sind und zur Niederhaltung und Gutumlenkung dienen.

Dadurch lässt sich zwar unter gewissen Bedingungen ein gleichmäßiger Erntegutfluss und außerdem eine Harmonisierung des Erntegutflusses innerhalb der Pickup erreichen. Nachteilig bleibt jedoch, dass die Bewegungen beider Niederhalterollen aneinander gekoppelt sind. Zum Beispiel wird beim Verschwenken der einen Niederhalterolle nach oben, zwangsweise die andere Niederhalterolle gleichfalls nach oben verschwenkt. Dadurch bedingt kann es zu Störungen der Gutförderung und Gutverdichtung kommen.

Eine weitere Niederhaltevorrichtung ist aus der US 4 015 410 bekannt, die eine frei drehbare an einem vertikal schwenkbaren Rahmen einer Ballenpresse angebrachte Walze aufweist. Die Walze wird infolge der Auflage des Rahmens auf einen Querträger mit geringem Abstand zu dem Boden gehalten. Dort bewirkt die Walze das Zusammenpressen des liegenden Erntegutschwades und bildet mit einer Aufnabmetrommel einen Gutflussspalt, durch den das Erntegut den nachfolgenden Bearbeitungsorganen zugeführt wird. Der Querträger, mit Zinkenstäben ausgebildet, dient ferner als Gutleitelement und als obere Begrenzung für das oberhalb der Aufnahmetrommel zu fördernde Erntegut.

Nachteilig an dieser Ausführungsform ist jedoch, dass der Niederhalter bei Veränderungen in der Höhe und in der Dichtheit des Erntegutschwades nur bei sehr hohem Druck, aufgrund des Eigengewichtes der Walze, und stetig ansteigender Schwadhöhe nach oben ausweicht und das Erntegut unter Umständen vor sich herschiebt, so dass es zu Zuführunterbrechungen kommen kann. Im weiteren kann das als Querträger mit Zinkenstaben ausgeführte Gutleitelement aufgrund seiner festen und unverschwenklichen Halterung an der Erntemaschine lediglich für sehr große Erntegutschwaden eine obere Begrenzung darstellen, so dass sich im Bereich der als Niederhalter wirkenden Walze und dem Gutleitelement sowie nachfolgenden Schneid- und/oder Förderorganen der Erntegutschwaden wieder ausdehnen kann und dort zu Verstopfungen im Erntegutfluss und damit wieder zu Ernteunterbrechungen fuhren.

Aufgabe der Erfindung ist es, die beschriebenen Nachteile im Stand der Technik zu vermeiden und insbesondere eine kontinuierliche Gutvorverdichtung und Gutförderung zu erreichen.

Die Aufgabe der Erfindung wird durch einen Niederhalter mit dem kennzeichnenden Merkmal des Patentanspruches 1 gelöst Erfindungsgemäß weist der Niederhalter zumindest ein erstes Niederhalteelement im Wirkungsbereich der Aufsammeltrommel und wenigstens ein weiteres, sich über die Aufnahmebreite erstreckendes Niederhalleelement außerhalb des Wirkungsbereichs der Aufsammeltrommel auf, wobei das weitere Niederhalteelement gegen den Boden eine Verdichtung des Erntegutes bewirkt. Vorteilhaft wird dadurch das zum Schwaden abgelegte Erntegut bereits vor dem Auftreffen auf die Aufsammeltrommel homogenisiert und vorverdichtet, wodurch das Erntegut von der Aufsammeltrommel besser aufgenommen und den nachfolgenden Schneid-/Förderorganen zugeleitet werden kann.

Vorzugsweise ist der Niederhalter als Stabniederhalter und/oder Blechniederhalter und/oder Rollenniederhalter ausgebildet. Diese Arten von Niederhaltern sind an Aufsammeleinrichtungen bekannt und haben sich jeweils für den Verwendungszweck der landwirtschaftlichen Erntemaschine angepasst als besonders vorteilhaft herausgestellt.

Indem zumindest ein Niederhalteelement ein Verdichtung des Erntegutes gegen die Aufsammeltrommel bewirkt, wird ein sicherer und kontinuierlicher Erntegutfluss innerhalb der Aufsammeleinrichtung auf konstruktiv einfache Weise sichergestellt

In vorteilhafter Weise sind die Niederhalteelemente relativ zueinander in einem vorgegebenen Schwenkbereich, begrenzt durch obere und untere Endanschläge aufweisende Führungselemente, bewegbar. Dies bewirkt vorteilhaft, dass die Erntegutförderung bzw. Erntegutverdichtung aufrechterhalten werden kann, auch wenn ein Niederhalteelement seinerseits die optimale Position zur Erntgutförderung bzw. Erntegutverdichturig aufgeben muss.

In vorteilhafter Weiterbildung der Erfindung ist der durch die Niederhalteelemente auf das Erntegut wirkende Auflagedruck unabhängig voneinander einstellbar. Dadurch kann der Auflagedruck der einzelnen Niederhalteelemente jeweils an die auftretende Erntegutmasse angepasst werden, so dass permanent innerhalb der Aufsammeleinrichtung ein homogener Erntegutfluss erreicht wird, Erntegutstauungen und damit Ernteunterbrechungen vermieden werden.

Indem der Niederhalter mit wenigstens einem Stellelement zur Veränderung des Auflagedruckes wenigstens eines Niederhalteelementes auf das Erntegut versehen ist, kann vorteilhaft das Eigengewicht des Niederhalters beziehungsweise das des jeweiligen Niederhalterelementes verringert werden, um eine Behinderung des Gutflusses oder eine Beschädigung des Erntegutes durch den Niederhalter zu verringern und eine Verbesserung der Fördereigenschaft zu bewirken. Die Einrichtung zur Beeinflussung des Auflagedruckes kann vorteilhaft eine vom Bediener der Erntemaschine während dem Ernten fernsteuerbare Einrichtung sein, so dass der Bediener jederzeit den Ernteguteigenschaften entsprechend den gewünschten Auflagedruck einstellen kann. Besonders vorteilhaft erweist sich die Verwendung von allgemein bekannten Drucksensoren, wodurch die Einstellung des Auflagedruckes der Niederhaiteeiemente zur Entlastung des Bediener der Erntemaschine mittels Hydraulik automatisch erfolgen kann.

In einer vorteilhaften Weiterbildung der Erfindung ist die Ausführung des Niederhalters so gewählt, dass ein erstes Niederhalteelement schwenkbeweglich mit dem Gestell der Aufsammeleinrichtung verbunden ist und dabei gegen den Boden das Erntegut verdichten kann. Ein weiteres Niederhalteelement, relativ bewegbar zum ersten, bewirkt dabei vorteilhaft eine Vorpressung des Erntegutes gegen die Aufsammeltrommel. Durch diese doppelte Verdichtung, die das Erntegut auf seinem Weg durch die Aufsammeleinrichtung erfährt, ist somit eine homogene und stetige, störungsfreie Zuführung des aufgenommenen Erntegutschwaden an nachfolgende Bearbeitungsorgane erreichbar.

Im besonderen eignen sich Niederhalteelemente mit Gutleitelementen in Form wenigstens eines Stabes und/oder eines Bleches und/oder einer Schneckenwendelung. Diese Niederhalteelemente lassen sich in besonders vorteilhafter Weise an der dem Erntegut zugewandten Seite des Niederhalters mit einer gegenüber der Erntgutflussrichtung angestellten und in den Erntegutstrom eingreifenden Ausrichtung befestigen. Ein erfindungsgemäßer angeordneter Stab und/oder ein Blech kann sich vorteilhaft auch über den Wirkungsbereich des Niederhalters hinaus erstrecken und dann weiter auf das Erntegut auf dem Weg durch die Aufsammeleinrichtung einwirken, Werden das erste und das relativ dazu bewegliche weitere Niederhalteelement als Rolleniederhalter mit umfangsseitiger Schneckenwendelung ausgebildet, bewirkt dies vorteilhaft mit dem Abrollen auf dem Erntegut eine Bewegung des Erntegutes quer zur Gutfiussrichtung und damit auch eine Vergleichmäßigung des in den Einzugsbereich einlaufenden Erntegutes.

In einer konstruktiv einfachen und kostengünstig herstellbaren Ausführungsform kann das in Flussrichtung des Erntegutes an einem als eine Niederhalterolle ausgebildeten ersten, außerhalb des Wirkungsbereichs der Aufnahmetrommel vorhandenen Niederhalteelement sich anschließende Gutleitelement als Niederhalteblech ausgeführt sein. Zur weiteren Verbesserung des Erntegutflusses und der Vermeidung des Abhebens des Erntegutes von den Förderorganen kann sich dem weiteren gleichfalls als Niederhalterolle ausgebildeten Niederhalteelement ein aus Zinken gebildetes Stabgitter anschließen. Gleichfalls können diese Gutleitelemente als Niederhalterrollen ausgeführt sein, wodurch die Wirkung der Gutleitelemente vorteilhaft an die Gegebenheiten und Eigenschaften des Erntegutes angepasst werden kann.

In einer weiteren vorteilhaften Ausgestaltung der Erfindung ist zumindest eine Niederhalterolle des Niederhalters mit einem an sich bekannten Gutleitelement wie beispielsweise eine Schneckenwendelung ausgestattet und zumindest bereichsweise mit unterschiedlichen Durchmessern ausgeführt. Dies bewirkt vorteilhaft, dass die Umfangsgeschwindigkeiten der Niederhalterolle bereichsweise unterschiedlich sind und dass hierdurch das Erntegut in Richtung des Rollenbereichs mit dem geringeren Durchmesser quer zur Gutflussrichtung gefördert wird.

Indem zumindest eine Niederhalterrolle aktiv angetrieben wird, kann die Gutförderung gezielt erhöht werden. Überdies bedeutet ein solcher Antrieb eine Drehzahlstellmöglichkeit, wodurch die Wirkung der Gutleitelemente auf einer Niederhalterolle an die Gegebenheiten und Eigenschaften des Erntegutes angepasst werden. Darüber hinaus kann vorteilhaft eine fahrgeschwindigkeitsabhängige Antriebssteuerung der Niederhalterolle realisiert werden, welches eine gutschonende Zusammenführung des Erntegutes bedeutet.

Vorzugsweise treibt zumindest eine Niederhafterolle des Niederhalters wenigstens eine weitere Niederhalterolle an. Diese Weiterbildung der Erfindung findet eine vorteilhafte Anwendung dann, wenn der Niederhalter mit zumindest zwei Niederhalterrollen ausgeführt ist. Es können dann vorteilhaft mittels der Wahl der Übersetzung des Antriebes gleiche oder unterschiedliche Umfangsgeschwindigkeiten der Niederhalterrollen realisiert werden. Diese Antriebsverbindung in Verbindung mit auf den Niederhalterollen angeordneten Gutleitelementen bewirkt vorteilhaft eine vergrößerte Querförderung des Erntegutes, da je nach Auslegung der Antriebsverbindung eine Geschwindigkeitsdifferenz zwischen der Geschwindigkeit des Erntegutes und der Umfanggeschwindigkeit einer angetriebenen Niederhalterolle erzeugt werden kann.

Indem das zum Verdichten des Erntegutes gegen den Boden geeignete Niederhalteelement in einer oberen Endlage fixierbar ist, kann im Falle einer Anstauung von Erntegut innerhalb der Aufsammeleinrichtung ein schneller und einfacher Zugang zum Ort möglichen Anstauungen von Erntegut innerhalb der Aufsammeleinrichtung gewährleistet werden.

Anhand der nachfolgenden Zeichnungen wird die Erfindung an Ausführungsbeispielen näher erläutert. Dabei zeigen
- Fig. 1: eine seitliche Draufsicht einer Pickup mit einem Rollenniederhalter,
- Fig. 2: eine Draufsicht auf die in Fig. 1 dargestellte Pickup

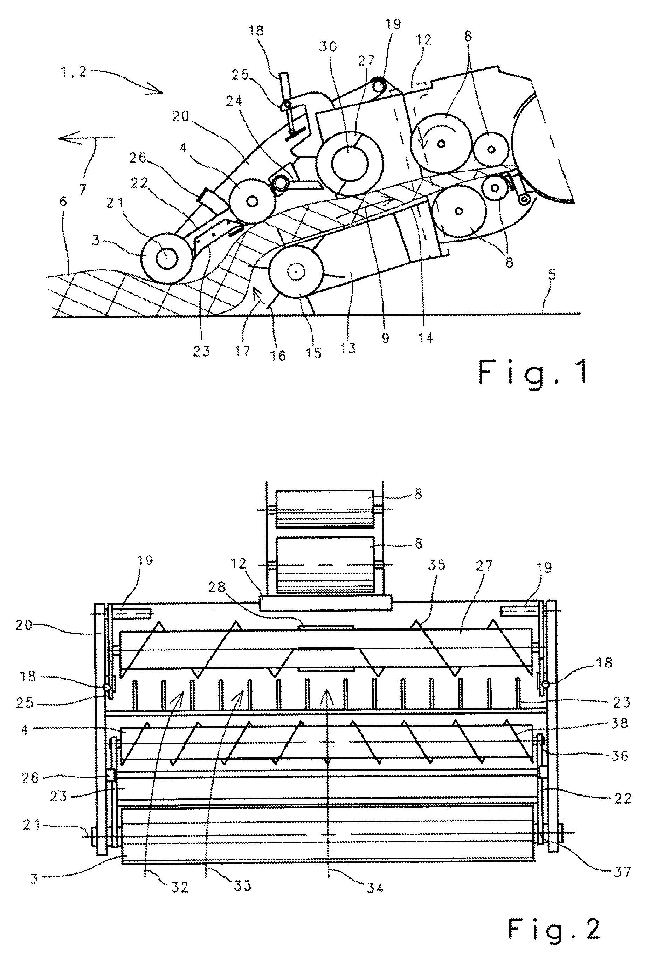

Fig. 1 zeigt eine Ausführungsform eher Aufsammeleinrichtung 1 in Form einer Pickup 2 mit einem Rolletiniederhalter 3, 4, 20, 22, 23, 24 in einem Längsschnitt in etwa durch die Mitte der Aufsamme!einrichtung 1. Die dargestellte Pickup 2 nimmt dabei auf dem Feldboden 5 liegendes Erntegut 6 auf, führt dieses zusammen und übergibt es dann, entgegen der Fahrtrichtung 7, an die nachfolgenden Einzugswalzen 8. Das aufgenommene Erntegut 6 wird dabei etwa entlang der eingezeichneten Gutflusslinie 9 durch die Pickup 2 gefördert. Die Pickup 2 ist dabei über einen Halterahmen 12 mit den weiteren Arbeitsorganen der landwirtschaftlichen Erntemaschine verbunden. An diesen Halterahmen 12 angelenkt, erstreckt sich in Fahrtrichtung 7 der landwirtschaftlichen Erntemaschine ein Trägerelement 13. Obenseitig bildet dieses Trägerelement 13 einen wannenförmigen Förderboden 14. An dem in Fahrtrichtung 7 vorderen Ende des Trägerelementes 13 ist das Aufsammelorgan, hier als Aufsammeltrommel 15 ausgeführt, angeordnet. Diese Auf-sammeltrommel 15 erstreckt sich quer zur Fahrtrichtung 7 über die gesamte Breite der Pickup 2 und gibt die Aufnahmebreite der Pickup 2 vor, Über die Aufnahmebreite erstrecken sich umfangsseitig der Aufsammeltrommel 15 mehrere nicht dargestellte Zinkenträger, welche jeweils mit einer Vielzahl von umfangsseitig durch die Mantelfläche der Aufsammeltrommel 15 hindurchragenden Zinken 16 bestückt ist. Diese Zinkenträger mit den zugeordneten Zinken 16 werden von der landwirtschaftlichen Erntemaschine in Drehrichtung 17 angetrieben. Dabei heben sie das als Schwad abgelegte Erntegut 6 vom Feldboden 5 ab und fördern dieses umfangsseitig entlang der Aufsammeltrommel 15 bis auf den Förderboden 14. Hierbei erfährt das Erntegut 6 zunächst eine horizontale/vertikale, dann eine vertikale und schließlich eine zunehmend horizontale Förderbewegung.

Um ein Abheben des Erntegutes 6 entlang der Gutflusslinie 9 zu vermeiden und um homogenisiertes und bereits vorverdichtetes Erntegut 6 der Aufsammeltrommel 15 zuzuführen, besteht der gezeigte Niederhalter 3, 4, 20, 22, 23, 24 aus zwei in Gutflussrichtung 9, in einem Abstand zueinander, geschalteten Niederhalterollen 3, 4. Erfindungsgemäß ist dabei die erste Niederhalterolle 3 vor und außerhalb des Wirkungsbereichs der Aufsammeltrommel 15 angeordnet. Diese Niederhalterolle 3 ist frei drehbar an beiden Enden jeweils an einem Haltesegment 20, wel-ches seinerseits über einen Drehpunkt 19 angelenkt mit dem Halterahmen 12 verbunden ist, außerhalb des Wirkungsbereichs der Aufsammeltrommel 15, in Fahrtrichtung 7 gesehen vor der Aufsammeltrommel 15 höhenbeweglich angelenkt. Dabei übernimmt die Niederhalterolle 3 vorteilhaft eine Verdichtung des Erntegutes 6 gegen den Feldboden 5. Direkt im Drehpunkt 21 an den vorderen Enden des jeweiligen Haltesegmentes 20 sind jeweils zwei Haltearme 22, die sich entgegen der Fahrtrichtung 7 erstrecken, höhenbeweglich angelenkt. Dabei ist an beiden Enden des jeweiligen Haltearmes 22 teilweise vor beziehungsweise oberhalb und innerhalb des Wirkungsbereichs der Aufsammeltrommel 15 eine weitere Niederhalterolie 4 höhenbeweglich angelenkt, die vorteilhaft eine Verdichtung des Erntegutes gegen die Aufsammeltrommel 15 bewirkt. Vorteilhaft überdeckt dabei ein Niederhalteblech 23 den Freiraum zwischen den Niederhalterollen 3, 4 und den Bereich von der oberen Niederhalterolle 4 bis wenigstens zur Abgabeseite der Pickup ein Stabgitter 24 Aufgrund der doppelten Vorverdichtung kann vorteilhaft ein homogenisierter Erntegutfluss innerhalb der Pickup 2 erreicht werden.

Die hier gezeigten Niederhalterollen 3, 4 sind dabei erfindungsgemäß in einem vorgegebenen Bereich relativ zu einander bewegbar, so dass die Niederhalterollen 3, 4 unabhängig voneinander eine Vorverdichtung des Erntegutes 6 bewirken. Hierdurch kann dann eine, hier nicht näher dargestellte, einstellbare Wirkungsweise des jeweiligen Niederhalterolle 3, erreicht werden. Geeignet hierfür sind beispielsweise mechanische, hydraulische oder aktive Stellglieder. Dadurch kann vorteilhaft der Auflagedruck der Niederhalterollen 3, 4 an Ernteguteigenschaften angepasst werden, wodurch ein gleichmäßiger Erntegutfluss und außerdem eine Harmonisierung des Erntegutflusses durch die Pickup 2 bewirkt werden kann.

An hier nicht näher dargestellten Seitenelementen des Trägerelementes 13 sind jeweils beidseitig mit unteren und oberen Endanschlägen versehene Führungselemente 25 fest verbunden und rechtwinkelig zum Haltesegment 20 angeordnet. Hierdurch wird die mögliche Höhenbeweglichkeit der Haltesegmente 20 die an ihren vorderen Enden eine Niederhalterolle 3 aufnehmen gegenüber der Aufsammeltrommel 15 und dem Förderboden 14 vorgegeben, Erfindungsgemäß sind die Haltesegmente 20 in ihrer oberen Endlage mittels an sich bekannten Befestigungsmöglichkeiten fixierbar. Dies bewirkt im Falle einer Anstauung von Erntegut 6 innerhalb der Aufsammeleinrichtung 1 einen schnellen und einfachen Zugang zum Ort der auftretenden Anstauungen von Erntegut 6 innerhalb der Pickup 2. Dabei ist dem Führungselement 25 ein Stellelement 18 zugeordnet, wodurch aktiv die Höhenbeweglichkeit des Niederhalters 3, 4, 20, 22, 23, 24 zur Steuerung des Auflagedruckes des Niederhalters 3, 4, 20, 22, 23, 24 auf das Erntegut 6 beeinflusst werden kann. Vorzugsweise ist das Stellelement 18 als an sich bekannter Hubzylinder ausgeführt. Gleichfalls weisen die Haltesegmente 20 beidseitig an ihren Außenkanten, rechtwinkelig zum jeweiligen Haltearm 22, mit unteren und oberen Endanschlägen versehene Führungselemente 26 auf, die ihrerseits die Höhenbeweglichkeit der Haltearme 22 gegenüber der Aufsammeltrommel 15 und dem Förderboden 14 vorgeben. Anstelle der Niederhalterollen 3, 4 können auch Stabniederhalter oder Blechniederhalter mit Niederhaltestäben eingesetzt werden. Gleichfalls können das Niederhalteblech 23 und das Stabgitter 24 als Rolleniederhalter und/oder als Stabniederhalter und/oder Blechniederhalter mit Niederhaltestäben ausgeführt sein.

Die obere Niederhalterolle 4 ist an dem jeweiligen Ende mit einer in Fig. 1 nicht näher dargestellten Schneckenwendelung versehen, Der oberen Niederhalterolle 4 ist im Erntegutfluss eine als Fördereinrichtung dienende, angetriebene Förderschnecke 27 nachgeordnet. Diese Förderschnecke 27 ist etwa oberhalb des wannenförmigen Förderbodens 14 fest an den hier nicht gezeigten Seitenteilen der Pickup 2 angelenkt, Diese Förderschnecke 27 führt das Erntegut 6 von der Aufnahmebreite der Pickup 2 auf die Breite der Einzugswalzen 8 zusammen. Das Erntegut wird von den auf der Förderschnecke 27 aufgesetzten Förderelementen 28 unterhalb des Walzenkerns 30 durchgeführt und an die Einzugswalzen 8 übergeben.

In Fig. 2 wird eine Draufsicht auf die in Fig. 1 gezeigte Pickup 2 gezeigt. An den Haltesegmenten 20 und an den Haltearmen 22 ist jeweils eine Niederhalterolle 3, 4 angeordnet, wobei sich die in Fahrtrichtung 7 vordere Niederfialterolle 3 außerhalb des Wirkungsbereichs der Aufsammeltrommel 15 und die sich anschließende Niederhalterolle 4 innerhalb des Wirkungsbereichs der Aufsammeltrommel 15 befindet. Vorteilhaft sind die Niederhalterollen 3, 4 relativ zueinander innerhalb des in Fig. 1 dargestellten durch Führungselemente 25, 26 begrenzten Schwenkbereichs entkoppelt voneinander bewegbar. Dies bewirkt vorteilhaft, dass die Erntegutförderung bzw. Vorverdichtung des Erntegutes 6 aufrechterhalten werden kann, auch wenn eine Niederhaltorolle 3, 4 seinerseits die optimale Position zur Erntgutförderung bzw. Erntegutverdichtung aufgeben muss. Jede Niederhaiterolle 3, 4 kann sich somit, ihrer jeweiligen Aufgabe entsprechend, an die Erntegutbedingungen anpassen. Damit in der Hintereinanderschaltung von Niederhaltern 3, 4, 23, 24 insbesondere bei Niederhalterollen 3, 4 keine Erntegutstauungen durch unuberdeckte Niederhaltebereiche entstehen, ist der Zwischenbereich zwischen beiden Niederhalterollen 3, 4 durch ein Niederhalteblech 23 abgedeckt. Der oberen Niederhalterolle 4 folgt abschließend noch ein Niederhalter 24 mit zur Abgabeseite der Pickup 2 hin angestellten Stäben, Die erfindungsgemäß, der Verdichtung des Erntegutes 6 gegen den Feldboden 5 dienende Niederhalterolle 3 besitzt eine über die Länge der Niederhalterolle 3 erstreckende Profilierung mit mehreren radial abstehenden Stegen 31. Das Erntegut 6 läuft bei mehreren Bewegungen der Pickup 2 in Fahrtrichtung 7 unterhalb der Niederhalterollen 3, 4 entlang der gezeichneten Gutflusslinien 32, 33, 34 ein und versetzt diese bei Kontakt mit dem Erntegut 6 und durch seine Profilierung in Drehbewegung. Auf der hinteren Niederhalterolle 4 sind auf der dem jeweiligen Haltearm 22 zugewandten Seite der Niederhalterolle 4, Gutleitelemente in Form von Schneckenwendelungen 35 umfangsseitig angebracht. Diese Schneckenwendelungen 35 erstrecken sich symmetrisch von den Haltearmen 22 aus zur Mitte der Pickup 2 hin, wobei die Schneckenwendelung 35 derart ausgeführt ist, dass bei einer vom Erntegut 6 angeregten Rotation der Niederhalterolle 4 eine Förderung des Erntegutes 6 zur Mitte der Pickup 2 hin bewirkt wird und gleichzeitig das Erntegut 6 eine Verdichtung gegen die Aufsammeltrommel 15 erfährt Erfindungsgemäß ist der Niederhalter 3, 4, 23, 24 mit wenigstens einem Stellelement 18, wie beispielsweise einem Hubzylinders, zur Steuerung des Auflagedruckes wenigstens eines Niederhalteelementes 3 auf das Erntegut 6 versehen, Weiterhin ist auch denkbar, die Steuerung des Auflagedruckes in Abhängigkeit von hier nicht dargestellten an sich bekannten Drucksensoren zu steuern. Dies bewirkt vorteilhaft eine an die Ernteguteigenschaften angepasste Vorverdichtung des Erntegutes 6 zur Erreichung eines kontinuierlichen Erntegutflusses durch die Pickup 2, weiches zur Entlastung des Bedieners der Aufsammeleinrichtung 1 führt. Zur Verbesserung der Querförderung des Erntegutes 6 innerhalb der Pickup 2 kann zwischen den einzelnen Niederhaltrolien 3, 4 eine Antriebsverbindung bestehen. Je nach Auslegung dieser Antriebsverbindung können bekannte Ketten-, Keilriemen- oder Zahnradantriebsverbindungen verwendet werden. An den jeweiligen Lagerstellen 36 der Niederhalterollen 3, 4 kann beispielsweise jeweils ein Kettenrad auf die jeweilige Welle koaxial drehfest aufgesetzt und ein gegenseitiger Antrieb durch eine die Kettenräder umhüllende Kette hergestellt werden. Auch ist denkbar, dass mehrere Niederhalterollen 3, 4 antriebsverbunden wenigstens eine Niederhalterolle 3, 4 antreiben. Ferner kann nur ein Teil der Niederhalterollen 3, 4 mit einem gemeinsamen Antrieb ausgeführt sein. Durch den Antrieb wird vorteilhaft die Wirkung der Gutleitelemente 38 auf der Niederhalterolle 4 erhöht. Zur Verringerung von Emtegutverlusten sowie zur aktiven Förderung des Erntegutes 6 durch die Pickup 2 kann zumindest auch eine Niederhalterolle 3, 4 durch eine Antriebseinrichtung aktiv angetrieben werden. Als Beispiel eignet sich dafür ein an sich bekannter elektromotorischer, hydraulischer oder mechanischer Antrieb, Dieser kann eine einzelne Niederhalterolle 3, 4 antreiben oder in eine Antriebsverbindung zumindest zwischen zwei Niederhalterollen 3, 4 eingreifen. Die Wirkungs- und Arbeitsweise der ersten und wenigstens einen weiteren Niederhalterolle 3, 4 wird hierdurch verbessert und kann außerdem, durch eine mögliche Steuerung der Antriebsdrehzahl aktiv, beispielsweise in Abhängigkeit von der Fahrgeschwindigkeit, von an sich bekannten Drehzahlsensoren oder der Umlaufgeschwindigkeit der Niederhalterollen 3, 4 beeinträchtigt werden. Durch Steuerung der Niederhalterollen 3, 4 ist damit die Verdichtungseigenschaft des Erntegutes aktiv beeinflussbar wobei eine hohe Niederhalterollenumlaufgeschwindigkeit eine Erntgutauflockerung und eine niedrige Niederhalterollenumlaufgeschwindigkeit eine Erntegutstauchung bedingt,

Das Erntegut 6 verlässt den Niederhaitebereich der Niederhalterolle 4 jeweils mit einer durch die Gutflusslinien 32, 33, 34 angezeigten Gutflussrichtung 9. Die nachgeschaltete, bereichsweise mit Förderschneckenwendelungen 35 ausgebildete Fördereinrichtung 27 fördert das Erntegut dann weiter bis auf die Breite der Einzugswalze 8 zusammen. Anschließend wird durch die auf dem Walzenkern 30 der Fördereinrichtung 27 aufgesetzten Förderelemente 28 die gesamte Erntegutmenge unterschlächtig den Einzugswalzen 8 zugeführt.

Es liegt im Rahmen des Könnens des Fachmanns den beschriebenen Niederhalter einer Pickup in nicht dargestellter Weise abzuwandeln oder in anderen als den dargestellten Anwendungsfällen einzusetzen, um die beschriebenen Effekte zu erzielen.

### Bezugszeichenliste

- 1: Aufsammeieinnchtung
- 2: Pickup
- 3: Rollenniederhalter
- 4: Rollenniederhalter
- 5: Feldboden
- 6: Erntegut
- 7: Fahrtrichtung
- 8: Einzugswalzen
- 9: Gutflusslinie
- 10:
- 11:
- 12: Halterahmen
- 13: Trägerelement
- 14: Förderboden
- 15: Aufsammeltrommel
- 16: Zinken
- 17: Drehrichtung
- 18: Stellelement
- 19: Drehpunkt
- 20: Haltesegment
- 21: Drehpunkt
- 22: Haltearm
- 23: Niederhalteblech
- 24: Stabgitter
- 25: Führungselement
- 26: Führungselement
- 27: Förderschnecke
- 28: Förderelement
- 29:
- 30: Walzenkern
- 31: Steg
- 32: Gutflusslinie
- 33: Gutflusslinie
- 34: Gutflusslinie
- 35: Schneckenwendelung
- 36: Lagerstelle
- 37: Lagerstelle
- 38: Gutleitelement

## Patentansprüche

1. Aufsammeleinrichtung (1) für landwirtschaftliche Erntemaschinen zum Aufnehmen von am Boden (5) liegendem Erntegut (6), mit einer mit Zinken (16) besetzten, eine Aufnahmebreite vorgebenden Aufsammeltrommel (15) und einer sich in Gutflussrlchtung daran anschließenden Förder- und/oder Schneideinrichtung sowie einem quer zur Fahrtrichtung (7) der Erntemaschine innerhalb des Wirkungsbereichs der Aufsammeltrommel (15) erstreckenden Niederhalter (3, 4, 20, 22, 23, 24)
**dadurch gekennzeichnet,**
**dass** der Niederhalter (3, 4, 20, 22, 23, 24) ein erstes Niederhalteelement (4) im Wirkungsbereich der Aufsammeltrommel (15) und wenigstens ein weiteres, sich über die Aufnahmebreite erstreckendes Niederhalteelement (3) außerhalb des Wirkungsbereichs der Aufsammeltrommel (15) aufweist und wobei das weitere Niederhalteelement (3) gegen den Feldboden (5) eine Vorverdichtung des Erntegutes (6) bewirkt.

2. Aufsaniimeleinrichtung (1) nach einem oder mehreren der vorherigen Ansprüche,
**dadurch gekennzeichnet,**
**dass** der Niederhalter (3, 4, 20, 22, 23, 24) wenigstens ein Stabniederhalter (24) und/oder ein Blechniederhafter (23) und/oder ein Rollenniederhalter (3, 4) ist.

3. Aufsammeleinrichtung (1) nach Anspruch 1,
**dadurch gekennzeichnet,**
**dass** zumindest ein Niederhalteelement (4) eine Verdichtung des Erntegutes (6) gegen die Aufsammeltrommel (15) bewirkt.

4. Aufsammeleinrichtung (1) nach einem oder mehreren der vorherigen Ansprüche,
**dadurch gekennzeichnet,**
**dass** die Niederhatteetemente (3, 4) relativ zueinander in einem vorgegebenen Schwenkbereich bewegbar sind.

5. Autsarromeieinrirrhtung (1) nach einem oder mehreren der vorherigen Ansprüche,
**dadurch gekennzeichnet.**
**dass** die Schwenkbewegungen durch wenigstens ein einen unteren und einen oberen Endanschlag aufweisendes Führungseleiment (25, 26) begrenzt ist.

6. Aufsammeleinrichtung (1) nach einem oder mehreren der vorherigen Ansprüche,
**dadurch gekennzeichnet,**
**dass** der Auflagedruck durch die Niederhalteelemente (3, 4) unabhängig voneinander einstellbar ist.

7. Aufsammeleinrichtung (1) nach einem oder mehreren der vorherigen Ansprüche,
**dadurch gekennzeichnet,**
**dass** der Niederhalter (3, 4, 20, 22, 23, 24) mit wenigstens einem Stellelement (18) zur Veränderung des Auflagedruckes wenigstens eines Niederhalteelementes (3, 4) auf das Erntegut (6) versehen ist.

8. Aufsammeleinrichtung (1) nach einem oder mehreren der vorherigen Ansprüche,
**dadurch gekennzeichnet;**
**dass** die Veränderung des Auflagedruckes steuerbar ist.

9. Aufsammeleinrichtung (1) nach einem oder mehreren der vorherigen Ansprüche,
**dadurch gekennzeichnet,**
**dass** zumindest ein Niederhalteelement (3) schwenkbeweglich mit dem Halterahmen (12) der Aufsammeleinrichtung (1) verbunden ist und gegen den Feldboden (5) das Erntegut (6) verdichten kann und das wenigstens eine weitere Niederhalteelement (4) relativ bewegbar zur diesem ist und das Erntegut (6) gegen die Aufsammeltrommel (15) verdichten kann.

10. Aufsarrimeleinrichtung (1) nach einem oder mehreren der vorherigen Ansprüche,
**dadurch gekennzeichnet,**
**dass** wenigstens einem Niederhaltelement (3, 4, 23, 24) wenigstens ein Gutleitelement in Form eines Stabes (23) und/oder eines Bleches (24) und/oder einer Schneckenwendetung (35) zugeordnet ist.

11. Aufsammeleimichlung (1) nach einem oder mehreren der vorherigen Ansprüche,
**dadurch gekennzeichnet,**
**dass** die Freiräume von und/oder zwischen dem ersten Niederhalteelement (3) und dem wenigstens einem weiteren Niederhaitetement (4) durch weitere Gutleitelemente (23, 24), die als Leitbiech (23) und/oder Stabgitter (24) und/oder Niederhalterollen ausgebildet sind, nahezu überdeckt wird.

12. Aufsammeleinrichtung (1) nach einem oder mehreren der vorherigen Ansprüche,
**dadurch gekennzeichnet,**
**dass** zumindest ein Niederhalteelement (3, 4) des Niederhalters (3, 4, 20, 22, 23, 24) ein Gutleitelement (38) aufweist und wobei die zumindest eine Niederhalterolle (3, 4) zumindest bereichsweise mit unterschiedlichen Durchmessern ausgeführt ist.

13. Aufsammeleinrichtung (1) nach einem oder mehreren der vorherigen Ansprüche,
**dadurch gekennzeichnet,**
**dass** der Niederhalter (3, 4, 20, 22, 23, 24) wenigstens bereichsweise eine Förderung des Erntegutes (6) quer zur Gutflussrichtung (9) bewirkt.

14. Aufsammeleinrichtung (1) nach einem oder mehreren der vorherigen Ansprüche,
**dadurch gekennzeichnet,**
**dass** wenigstens ein Niederhalteelement (3, 4) aktiv angetrieben ist.

15. Aufsammeleinrichtung (1) nach einem oder mehreren der vorherigen Ansprüche,
**dadurch gekennzeichnet,**
**dass** zumindest eine Niederhalterolle (3, 4) wenigstens eine weitere Niederhalterolle (3, 4) antreibt.

16. Aufsammeleinrichtung (1) nach einem oder mehreren der vorherigen Ansprüche,
**dadurch gekennzeichnet**
**dass** das zum Verdichten des Erntegutes (6) gegen den Feldboden (5) geeignete Niederhalteelement (3) in einer oberen Endlage fixierbar ist.

17. Aufsammeleinrichtung (1) nach einem oder mehreren der vorherigen Ansprüche,
**dadurch gekennzeichnet,**
**dass** die Aufsammeleinrichtung (1) als Pickup (2) ausgeführt ist.

## Claims

1. A pickup device (1) for agricultural harvesting machines for picking up crop material (6) lying on the ground (5), comprising a pickup drum (15) which is fitted with tines (16) and which predetermines a pick- up width, and a conveyor and/or cutting device adjoining the pickup drum in the material flow direction as well as a hold-down device (3, 4, 20, 22, 23, 24) which extends transversely relative to the direction of travel (7) of the harvesting machine within the operating region of the pickup drum (15), **characterised in that** the hold-down device (3, 4, 20, 22, 23, 24) has a first hold-down element (4) in the operating region of the pickup drum (15) and at least one further hold-down element (3) extending over the pickup width outside the operating region of the pickup drum (15) and wherein the further hold-down element (3) causes pre-compacting of the crop material (6) against the ground (5) in the field.

2. A pickup device according to claim 1 **characterised in that** the hold-down device (3, 4, 20, 22, 23, 24) is at least one hold-down bar (24) and/or a hold-down plate (23) and/or a hold-down roller (3, 4).

3. A pickup device (1) according to claim 1 **characterised in that** at least one hold-down element (4) causes compacting of the crop material (6) against the pickup drum (15).

4. A pickup device (1) according to one or more of the preceding claims **characterised in that** the hold-down elements (3, 4) are movable relative to each other in a predetermined pivotal range.

5. A pickup device (1) according to one or more of the preceding claims **characterised in that** the pivotal movements are limited by at least one guide element (25, 26) having a lower and an upper limit abutment.

6. A pickup device (1) according to one or more of the preceding claims **characterised in that** the contact pressure applied by the hold-down elements (3, 4) is adjustable independently of each other.

7. A pickup device (1) according to one or more of the preceding claims **characterised in that** the hold-down device (3, 4, 20, 22, 23, 24) is provided with at least one adjusting element (18) for altering the contact pressure of at least one hold-down element (3, 4) against the crop material (6).

8. A pickup device (1) according to one or more of the preceding claims **characterised in that** the alteration in the contact pressure is controllable.

9. A pickup device (1) according to one or more of the preceding claims **characterised in that** at least one hold-down element (3) is pivotably movably connected to the holding frame (12) of the pickup device (1) and can compact the crop material (6) against the ground (5) in the field and the at least one further hold-down element (4) is movable relative thereto and can compact the crop material (6) against the pickup drum (15).

10. A pickup device (1) according to one or more of the preceding claims **characterised in that** associated with at least one hold-down element (3, 4, 23, 24) is at least one material guide element in the form of a bar (23) and/or a plate (24) and/or a screw turn (35).

11. A pickup device (1) according to one or more of the preceding claims **characterised in that** the free spaces in front of and/or between the first hold-down element (3) and the at least one further hold-down element (4) is almost covered over by further material guide elements (23, 24) which are in the form of a guide plate (23) and/or bar grid (24) and/or hold-down rollers.

12. A pickup device (1) according to one or more of the preceding claims **characterised in that** at least one hold-down element (3, 4) of the hold-down device (3, 4, 20, 22, 23, 24) has a material guide element (38) and wherein the at least one hold-down roller (3, 4) is at least region-wise of different diameters.

13. A pickup device (1) according to one or more of the preceding claims **characterised in that** the hold-down device (3, 4, 20, 22, 23, 24) at least region-wise causes conveyance of the crop material (6) transversely relative to the material flow direction (9).

14. A pickup device (1) according to one or more of the preceding claims **characterised in that** at least one hold-down element (3, 4) is actively driven.

15. A pickup device (1) according to one or more of the preceding claims **characterised in that** at least one hold-down roller (3, 4) drives at least one further hold-down roller (3, 4).

16. A pickup device (1) according to one or more of the preceding claims **characterised in that** the hold-down element (3) suitable for compacting the crop material (6) against the ground (5) in the field is fixable in an upper end position.

17. A pickup device (1) according to one or more of the preceding claims **characterised in that** the pickup device (1) is in the form of a pickup (2).

## Revendications

1. Dispositif ramasseur (1) destiné à des récolteuses agricoles pour ramasser la récolte (6) au sol (5), comprenant un tambour ramasseur (15) muni de doigts (16), prédéterminant une largeur de ramassage, et un dispositif de transport et/ou de coupe, situé à la suite dans le sens du flux de la récolte, ainsi qu'un égalisateur (3, 4, 20, 22, 23, 24) s'étendant transversalement au sens d'avancement (7) de la récolteuse, dans la zone d'action du tambour ramasseur (15), **caractérisé par le fait que** l'égalisateur (3, 4, 20, 22, 24) présente un premier élément égalisateur (4), dans la zone d'action du tambour ramasseur (15), et au moins un élément égalisateur (3) supplémentaire, s'étendant sur la largeur de ramassage, à l'extérieur de la zone d'action du tambour ramasseur (15), et l'élément égalisateur (3) supplémentaire réalisant une précompression de la récolte (6) contre le sol du champ (5).

2. Dispositif ramasseur (1) selon une ou plusieurs des revendications précédentes, **caractérisé par le fait que** l'égalisateur (3, 4, 20, 22, 23, 24) est au moins un égalisateur à barre (24) et/ou un égalisateur à tôle (23) et/ou un égalisateur à rouleau (3, 4).

3. Dispositif ramasseur (1) selon la revendication 1, **caractérisé par le fait qu'**au moins un élément égalisateur (4) effectue une compression de la récolte (6) contre le tambour ramasseur (15).

4. Dispositif ramasseur (1) selon une ou plusieurs des revendications précédentes, **caractérisé par le fait que** les éléments égalisateurs (3, 4) peuvent être déplacés l'un par rapport à l'autre dans une zone de pivotement prédéterminée.

5. Dispositif ramasseur (1) selon une ou plusieurs des revendications précédentes, **caractérisé par le fait que** les mouvements pivotants sont limités par au moins un élément de guidage (25, 26) présentant des butées de fin de course inférieure et supérieure.

6. Dispositif ramasseur (1) selon une ou plusieurs des revendications précédentes, **caractérisé par le fait que** la pression d'appui peut être réglée par les éléments égalisateurs (3, 4), indépendamment l'un de l'autre.

7. Dispositif ramasseur (1) selon une ou plusieurs des revendications précédentes, **caractérisé par le fait que** l'égalisateur (3, 4, 20, 22, 23, 24) est pourvu d'au moins un élément de manoeuvre (18) pour modifier la pression d'appui d'au moins un élément égalisateur (3, 4) sur la récolte (6).

8. Dispositif ramasseur (1) selon une ou plusieurs des revendications précédentes, **caractérisé par le fait que** la modification de la pression d'appui est contrôlable.

9. Dispositif ramasseur (1) selon une ou plusieurs des revendications précédentes, **caractérisé par le fait qu'**au moins un élément égalisateur (3) est relié avec possibilité de pivotement au châssis support (12) du dispositif ramasseur (1) et peut comprimer la récolte (6) contre le sol du champ (5), et l'élément égalisateur (4) supplémentaire, au nombre d'au moins un, peut être déplacé par rapport à celui-ci et peut comprimer la récolte (6) contre le tambour ramasseur (15).

10. Dispositif ramasseur (1) selon une ou plusieurs des revendications précédentes, **caractérisé par le fait qu'**au moins un élément de guidage de récolte, réalisé sous forme de barre (23) et/ou de tôle (24) et/ou de vis (35), est associé à au moins un élément égalisateur (3, 4, 23, 24).

11. Dispositif ramasseur (1) selon une ou plusieurs des revendications précédentes, **caractérisé par le fait que** les espaces libres avant et/ou entre le premier élément égalisateur (3) et au moins un élément égalisateur (4) supplémentaire sont presque recouverts par des éléments de guidage de récolte (23, 24) supplémentaires, qui sont réalisés sous forme de tôle de guidage (23) et/ou de grille à barreaux (24) et/ou de rouleaux égalisateurs.

12. Dispositif ramasseur (1) selon une ou plusieurs des revendications précédentes, **caractérisé par le fait qu'**au moins un élément égalisateur (3, 4) de l'égalisateur (3, 4, 20, 22, 23, 24) présente un élément de guidage de récolte (38), le rouleau égalisateur (3, 4), au nombre d'au moins un, étant réalisé au moins localement avec des diamètres différents.

13. Dispositif ramasseur (1) selon une ou plusieurs des revendications précédentes, **caractérisé par le fait que** l'égalisateur (3, 4, 20, 22, 23, 24) provoque au moins localement un transport de la récolte (6) perpendiculairement au sens du flux de récolte (9).

14. Dispositif ramasseur (1) selon une ou plusieurs des revendications précédentes, **caractérisé par le fait qu'**au moins un élément égalisateur (3, 4) est entraîné activement.

15. Dispositif ramasseur (1) selon une ou plusieurs des revendications précédentes, **caractérisé par le fait qu'**au moins un rouleau égalisateur (3, 4) entraîne au moins un rouleau égalisateur (3, 4) supplémentaire.

16. Dispositif ramasseur (1) selon une ou plusieurs des revendications précédentes, **caractérisé par le fait que** l'élément égalisateur (3), qui est adapté pour comprimer la récolte (6) contre le sol du champ (5), peut être immobilisé dans une position extrême supérieure.

17. Dispositif ramasseur (1) selon une ou plusieurs des revendications précédentes, **caractérisé par le fait que** le dispositif ramasseur (1) est réalisé sous forme de pick-up (2).
